# EUROPÄISCHE PATENTSCHRIFT

(11) **EP 4 175 784 B1**
(45) Veröffentlichungstag und Bekanntmachung des Hinweises auf die Patenterteilung: **19.06.2024**
(21) Anmeldenummer: 21739310.7
(22) Anmeldetag: 30.06.2021
(51) Int. Cl.: B23K 26/08, B21B 15/00, B23K 26/242, B23K 26/28, B23K 26/38, B23K 26/60, B21B 39/08, B23K 101/16

(54) **BEARBEITUNGSVERFAHREN UND -ANLAGE ZUM SCHWEISSEN VON METALLBÄNDERN**
PROCESSING METHOD OF AND ARRANGEMENT FOR WELDING OF METAL STRIPS
MÉTHODE ET INSTALLATION DE SOUDAGE DE BANDES MÉTALLIQUES

(30) Priorität: 06.07.2020 EP 20184277
(43) Veröffentlichungstag der Anmeldung: 10.05.2023
(73) Patentinhaber: Primetals Technologies Germany GmbH, 91058 Erlangen (DE)
(72) Erfinder: HOFBAUER, Josef, 91058 Erlangen (DE)
(74) Vertreter: Metals@Linz
(86) Internationale Anmeldenummer: PCT/EP2021/068051
(87) Internationale Veröffentlichungsnummer: WO 2022/008317

(56) Entgegenhaltungen:
- EP-A2- 1 260 301
- DE-A1-102004 018 600
- JP-A- H07 178 417
- US-A1- 2010 051 590

## Beschreibung

### Gebiet der Technik

Die vorliegende Erfindung geht aus von einem Bearbeitungsverfahren für Metallbänder,
- wobei einem Bandspeicher einer Bearbeitungsanlage für die Metallbänder intermittierend und sequenziell nacheinander in einer für die Metallbänder einheitlichen Transportrichtung jeweils ein Metallband zugeführt wird,
- wobei das jeweilige Metallband einen jeweiligen Bandkopf, einen jeweiligen Bandfuß sowie zwischen dem jeweiligen Bandkopf und dem jeweiligen Bandfuß ein jeweiliges Filetstück aufweist,
- wobei das jeweilige Metallband zuerst mit dem jeweiligen Bandkopf, sodann dem jeweiligen Filetstück und schließlich dem jeweiligen Bandfuß in den Bandspeicher einläuft,
- wobei der jeweilige Bandkopf eine jeweilige Vorderkante und der jeweilige Bandfuß eine jeweilige Hinterkante aufweist,
- wobei die jeweilige Vorderkante unmittelbar vor dem Zuführen des jeweiligen Metallbandes zum Bandspeicher mittels einer Schweißmaschine der Bearbeitungsanlage an die Hinterkante eines dem Bandspeicher jeweils unmittelbar zuvor teilweise zugeführten Metallbandes angeschweißt wird, so dass sich zwischen der Vorderkante des jeweiligen Metallbandes und der Hinterkante des jeweils unmittelbar zuvor teilweise zugeführten Metallbandes eine jeweilige Schweißnaht bildet,
- wobei die jeweilige Schweißnaht sich quer zur Transportrichtung gesehen von einer in Transportrichtung verlaufenden Seitenkante eines der beiden beteiligten Metallbänder zur anderen Seitenkante desselben Metallbandes oder zu einer Seitenkante des anderen Metallbandes erstreckt,
- wobei die im Bandspeicher gespeicherten Metallbänder einschließlich der die Metallbänder verbindenden Schweißnähte von dem Bandspeicher kontinuierlich oder intermittierend einer Bearbeitungseinrichtung der Bearbeitungsanlage zugeführt werden,
- wobei der Bearbeitungseinrichtung jeweils zunächst der Bandkopf, sodann das Filetstück und erst danach der Bandfuß des jeweiligen Metallbandes zugeführt werden.

Die vorliegende Erfindung geht weiterhin aus von einer Bearbeitungsanlage für Metallbänder,
- wobei die Bearbeitungsanlage einen Bandspeicher aufweist, dem intermittierend und sequenziell nacheinander in einer für die Metallbänder einheitlichen Transportrichtung jeweils ein Metallband zugeführt wird,
- wobei das jeweilige Metallband einen jeweiligen Bandkopf, einen jeweiligen Bandfuß sowie zwischen dem jeweiligen Bandkopf und dem jeweiligen Bandfuß ein jeweiliges Filetstück aufweist,
- wobei das jeweilige Metallband zuerst mit dem jeweiligen Bandkopf, sodann dem jeweiligen Filetstück und schließlich dem jeweiligen Bandfuß in den Bandspeicher einläuft,
- wobei der jeweilige Bandkopf eine jeweilige Vorderkante und der jeweilige Bandfuß eine jeweilige Hinterkante aufweist,
- wobei die Bearbeitungsanlage eine dem Bandspeicher vorgeordnete Schweißmaschine aufweist, mittels derer die Vorderkante des jeweiligen Metallbandes unmittelbar vor dem Zuführen des jeweiligen Metallbandes zum Bandspeicher an die Hinterkante eines dem Bandspeicher jeweils unmittelbar zuvor teilweise zugeführten Metallbandes angeschweißt wird, so dass sich zwischen der Vorderkante des jeweiligen Metallbandes und der Hinterkante des jeweils unmittelbar zuvor teilweise zugeführten Metallbandes eine jeweilige Schweißnaht bildet,
- wobei die jeweilige Schweißnaht sich quer zur Transportrichtung gesehen von einer in Transportrichtung verlaufenden Seitenkante eines der beiden beteiligten Metallbänder zur anderen Seitenkante desselben Metallbandes oder zu einer Seitenkante des anderen Metallbandes erstreckt,
- wobei die im Bandspeicher gespeicherten Metallbänder einschließlich der die Metallbänder verbindenden Schweißnähte von dem Bandspeicher kontinuierlich oder intermittierend einer Bearbeitungseinrichtung der Bearbeitungsanlage zugeführt werden,
- wobei der Bearbeitungseinrichtung jeweils zunächst der Bandkopf, sodann das Filetstück und erst danach der Bandfuß des jeweiligen Metallbandes zugeführt werden.

Ein Bearbeitungsverfahren für Metallbänder und auch die zugehörige Bearbeitungsanlage sind beispielsweise aus der DE 198 43 282 A1 bekannt.

Das Metallband kann insbesondere aus Stahl oder Aluminium bestehen. Es sind aber auch andere Metalle und Legierungen möglich. Die Bearbeitungseinrichtung kann eine Beize, einen Streckrichter oder ein Walzwerk umfassen, insbesondere ein Kaltwalzwerk. Auch mehrere dieser Komponenten können vorhanden sein, insbesondere sogar alle Komponenten. Wenn mehrere Komponenten vorhanden sind, werden diese von den Metallbändern sequenziell nacheinander durchlaufen.

Es ist möglich, dass das jeweilige Metallband dem Bandspeicher von einem Abhaspel zugeführt wird. In diesem Fall wird das jeweilige Metallband als Coil in den Abhaspel eingesetzt und sodann abgehaspelt. Gegebenenfalls kann zwischen dem Abhaspel und der Schweißmaschine ein weiterer Bandspeicher angeordnet sein. Weder der Abhaspel noch der weitere Bandspeicher sind aber zwingend erforderlich.

### Stand der Technik

in vielen Fällen werden Bearbeitungseinrichtungen für Metallbänder kontinuierlich betrieben. Kontinuierlicher Betrieb bedeutet in diesem Zusammenhang, dass der jeweiligen Bearbeitungseinrichtung ein Endlosband zugeführt wird, so dass die Komponenten der Bearbeitungseinrichtung jeweils permanent einen Abschnitt des Endlosbandes bearbeiten. Derartige Betriebsweisen sind beispielsweise für Beizen, Streckrichter und Walzwerke (insbesondere Kaltwalzwerke) bekannt. Zur Erzeugung des Endlosbandes werden vielfach einzelne, diskrete Metallbänder aneinander gesetzt, also der Bandkopf eines Metallbandes an den Bandfuß des vorhergehenden Metallbandes angesetzt. Die Metallbänder können aus demselben Material (beispielsweise einem Stahl mit einer für die Metallbänder einheitlichen chemischen Zusammensetzung) oder aus voneinander verschiedenen Materialien bestehen (beispielsweise Stählen mit voneinander verschiedenen chemischen Zusammensetzungen) bestehen. Auch die Abmessungen, also die Bandbreiten und die Banddicken, können gleich oder voneinander verschieden sein.

Das Verbinden der Metallbänder miteinander erfolgt über eine jeweilige Schweißnaht, die mittels einer Schweißmaschine erzeugt wird. Während des Schweißvorgangs werden der entsprechende Bandkopf und der entsprechende Bandfuß nicht gefördert. Aus diesem Grund ist zwischen der Schweißmaschine und der Bearbeitungseinrichtung ein Bandspeicher angeordnet. In dem Bandspeicher kann eine variable Länge des Endlosbandes gespeichert und gepuffert werden. Insbesondere kann die Geschwindigkeit, mit welcher das Endlosband aus dem Bandspeicher ausläuft, unabhängig von der Geschwindigkeit eingestellt werden, mit der das Endlosband in den Bandspeicher einläuft. Unterscheiden sich die Geschwindigkeiten, ändert sich selbstverständlich der Füllgrad des Speichers. Über längere Zeiträume betrachtet müssen die Einlaufgeschwindigkeit und die Auslaufgeschwindigkeit daher im Mittel gleich sein, da anderenfalls der Bandspeicher entweder leerlaufen oder überlaufen würde. Kurzzeitige Unterschiede in den Geschwindigkeiten können jedoch durch den Bandspeicher ausgeglichen werden.

Die entsprechenden Ausgestaltungen der Bearbeitungseinrichtung, der Schweißmaschine und des Bandspeichers und auch ihre Betriebsweisen sind Fachleuten allgemein bekannt.

Im Rahmen des Durchlaufs des Endlosbandes durch die Bearbeitungseinrichtung durchlaufen auch die Schweißnähte die Bearbeitungseinrichtung. Die Schweißnähte stellen oftmals Schwachstellen des Endlosbandes dar. Bei Streckrichtern besteht beispielsweise die Gefahr, dass das Endlosband bricht, während eine Schweißnaht den Streckrichter durchläuft. In noch größerem Umfang besteht bei Walzgerüsten die Gefahr, dass das Endlosband reisst, während eine Schweißnaht den Walzspalt des entsprechenden Walzgerüsts durchläuft. Durch ein Herstellen von qualitativ hochwertigen Schweißnähten kann diese Gefahr zwar reduziert werden. Es sind jedoch ein hohes Maß an Prozess-Know-how und eine qualitativ hochwertige Wartung der Schweißmaschine erforderlich. Insbesondere am Ende eines Produktionszyklus (beispielsweise vor einem Wartungsstillstand) kann diese Qualität nicht immer in vollem Umfang aufrechterhalten werden. Weiterhin sollen oftmals Materialien miteinander geschweißt werden, die nur schwer miteinander schweißbar sind. Bei derartigen Materialien besteht ein besonders hohes Risiko eines Bandrisses.

Um das Risiko eines Bandrisses im Bereich der Schweißnähte zu minimieren, werden insbesondere bei Walzwerken die Übergangsabschnitte vom einen zum anderen Metallband, also die jeweilige Schweißnaht und die Bereiche ein Stück davor und ein Stück dahinter, auf spezielle Art und Weise gewalzt, beispielsweise mit geringeren Walzkräften und geringeren Stichabnahmen. Aufgrund der anderen Art und Weise der Walzung weisen die Übergangsabschnitte jedoch andere Eigenschaften auf als die übrigen Bereiche der Metallbänder. Dies kann sowohl geometrische Eigenschaften (beispielsweise die Banddicke) als auch mechanische Eigenschaften (beispielsweise die Zugfestigkeit, die Dehngrenze und die Streckgrenze) betreffen. Die entsprechenden Übergangsabschnitte können daher oftmals nicht verwertet werden, sondern stellen Ausschuss dar.

Aus der EP 1 260 301 A2 (offenbarend aller Merkmale und Schritte des Oberbegriffes der Ansprüche 1 und 5) ist bekannt, zwei Metallbänder mit einer diagonal verlaufenden Schweißnaht zu verbinden. Es sind Winkel von 15° bis 45° zur Längsrichtung des Metallbandes genannt. Die Bearbeitungseinrichtung ist eine Rohrformeinrichtung.

Aus der US 2010/0 051 590 A1 ist bekannt, zwei Metallbänder mit einer diagonal verlaufenden Schweißnaht zu verbinden. Der Winkel, unter dem die Schweißnaht verläuft, ist derart gewählt, dass die Längserstreckung der Schweißnaht größer als die gedrückte Länge bei einem nachfolgenden Walzvorgang ist.

Aus der JP H07 178 417 A ist bekannt, zwei Metallbänder mit einer Schweißnaht zu verbinden. Die Schweißnaht kann diagonal oder im Zickzack verlaufen. Der Winkel, den die Schweißnaht mit der Transportrichtung bildet, liegt bei mindestens 30°.

### Zusammenfassung der Erfindung

Die Aufgabe der vorliegenden Erfindung besteht darin, Möglichkeiten zu schaffen, mittels derer die Gefahr eines Bandrisses minimiert werden kann und dennoch insbesondere bei Walzvorgängen der anfallende Ausschuss so gering wie möglich gehalten werden kann. Weiterhin soll die Möglichkeit bestehen, konventionelle Schweißmaschinen, mittels derer nur eine Schweißnaht orthogonal zur Transportrichtung gebildet werden kann, derart nachzurüsten, dass sie einen diagonalen Verlauf der Schweißnaht 14 herstellen können.

Die Aufgabe wird durch ein Bearbeitungsverfahren für Metallbänder mit den Merkmalen des Anspruchs 1 gelöst. Vorteilhafte Ausgestaltungen des Bearbeitungsverfahrens sind Gegenstand der abhängigen Ansprüche 2 bis 4.

Erfindungsgemäß wird ein Bearbeitungsverfahren der eingangs genannten Art dadurch ausgestaltet, dass die Schweißmaschine derart betrieben wird, dass
- vor dem Anschweißen der Vorderkante des jeweiligen Metallbandes an die Hinterkante des dem Bandspeicher teilweise zugeführten Metallbandes der Bandkopf des jeweiligen Metallbandes und der Bandfuß des dem Bandspeicher teilweise zugeführten Metallbandes leicht verdreht werden,
- sodann die beiden Bänder durch Bilden der Schweißnaht miteinander verbunden werden, wobei die Schweißnaht beim Schweißen als solchem ausschließlich quer zur Transportrichtung verläuft, und
- schließlich der Bandkopf des jeweiligen Metallbandes und der Bandfuß des dem Bandspeicher teilweise zugeführten Metallbandes wieder zurück verdreht werden, so dass die Schweißnaht nach dem Verdrehen der dann miteinander geschweißten Metallbänder diagonal zur Transportrichtung verläuft.

Dadurch läuft zunächst die jeweilige Schweißnaht nicht mehr zum selben Zeitpunkt über ihre gesamte Breite in die Bearbeitungseinrichtung ein und wird dort zum selben Zeitpunkt der Bearbeitung unterzogen, sondern verschiedene Abschnitte der jeweiligen Schweißnaht laufen zeitlich nacheinander in die Bearbeitungseinrichtung ein und werden dort nacheinander der Bearbeitung unterzogen. Zu jedem Zeitpunkt ist daher jeweils nur ein Teil der jeweiligen Schweißnaht der Beanspruchung durch den Bearbeitungsvorgang unterzogen. Beispielsweise bei einer Walzvorgang wird zu jedem Zeitpunkt nur der entsprechende Teil der jeweiligen Schweißnaht verformt. Der zu einem bestimmten Zeitpunkt der Bearbeitung unterzogene Abschnitt der jeweiligen Schweißnaht ist somit auf mindestens einer Seite, in der Regel sogar auf beiden Seiten, von dem Material des einen oder des anderen Metallbandes flankiert. Belastungen können daher von dem einen und/oder dem anderen Metallband aufgenommen werden. Nur ein geringer Teil der Belastung wirkt unmittelbar auf die jeweilige Schweißnaht. Der Linienstress auf die jeweilige Schweißnaht kann damit deutlich verringert werden. Weiterhin kann das Ausmaß kurzzeitiger Störungen, die durch das Bearbeiten der jeweiligen Schweißnaht erzeugt werden, aufgrund der zeitlichen Streckung bei der Bearbeitung der jeweiligen Schweißnaht deutlich reduziert werden. Die Stabilität des Bearbeitungsvorgangs kann dadurch erhöht werden. Schließlich ist die Art und Weise, mittels derer die diagonale Schweißnaht erzeugt wird, auch bei einer bestehenden konventionellen Schweißmaschine nachrüstbar.

Die jeweilige Vorderkante wird zum Schweißen mit dem Ende des vorhergehenden Metallbandes vorbereitet. Dies kann insbesondere durch eine Aufbereitung des Verlaufs der jeweiligen Vorderkante erfolgen, so dass der Verlauf der jeweiligen Vorderkante mit dem Verlauf der Hinterkante des jeweils vorhergehenden Metallbandes korrespondiert. Dieser Verlauf korrespondiert mit dem späteren Verlauf der jeweiligen Schweißnaht. Das Vorbereiten kann beispielsweise ein Schopfen mittels einer Schere sein. In analoger Weise kann auch der Bandfuß aufbereitet werden. In vielen Fällen erfolgt das Vorbereiten mittels eines Lasers, der am Bandkopf ein kleines Stück des jeweiligen Metallbandes abtrennt, so dass die durch diese Bearbeitung gebildete vordere Kante die Vorderkante des jeweiligen Metallbandes ist. In analoger Weise wird auch die Hinterkante des jeweils unmittelbar vorhergehenden Metallbandes vorbereitet. In der Regel werden unmittelbar vor dem Schwei-ßen die beiden beteiligten Metallbänder aufeinander zu gefahren, so dass sie vollständig oder zumindest fast aneinander anstoßen. Werden des Schweißvorgangs selbst werden der Bandkopf des einen und der Bandfuß des anderen Metallbandes in der Schweißmaschine fixiert gehalten, beispielsweise geklemmt.

Die Schweißmaschine kann beispielsweise derart betrieben werden, dass zum Verdrehen des Bandkopfes des jeweiligen Metallbandes und des Bandfußes des dem Bandspeicher teilweise zugeführten Metallbandes in entsprechenden Bereichen des Bandkopfes des jeweiligen Metallbandes und des Bandfußes des dem Bandspeicher teilweise zugeführten Metallbandes Schlaufen gebildet werden.

In vielen Fällen ist die Bearbeitungseinrichtung als Walzwerk mit mindestens einem Walzgerüst ausgebildet. In diesem Fall werden die Metallbänder in den Walzgerüsten der Bearbeitungseinrichtung mit einer jeweiligen gedrückten Länge gewalzt.

Der Begriff "gedrückte Länge" ist Fachleuten allgemein bekannt. Er bezeichnet in Transportrichtung gesehen denjenigen Bereich, in dem das jeweilige Metallband bei dem jeweiligen Walzvorgang von seiner Dicke einlaufseitig des jeweiligen Walzgerüsts auf seine Dicke auslaufseitig des jeweiligen Walzgerüsts gewalzt wird. Eine Längserstreckung, welche die jeweilige Schweißnaht in Transportrichtung gesehen vor dem Walzen in dem jeweiligen Walzgerüst aufweist, ist vorzugsweise größer als die jeweilige gedrückte Länge. Insbesondere dadurch wird erreicht, dass beim Walzen der jeweiligen Schweißnaht zu keinem Zeitpunkt die vollständige Schweißnaht dem jeweiligen Walzvorgang unterzogen wird.

Vorzugsweise ist ein Winkel, den die jeweilige Schweißnaht mit der Transportrichtung bildet, um ca. 5° bis 10° von 90° verschieden, insbesondere um 6° bis 8°.

In der Regel ist die gedrückte Länge beim ersten Walzvorgang größer oder zumindest nicht kleiner als die gedrückte Länge bei den anderen Walzvorgängen. Durch das Walzen der Metallbänder verlängert sich weiterhin bei jedem Walzvorgang die Längserstreckung der jeweiligen Schweißnaht. Sofern die Längserstreckung der jeweiligen Schweißnaht in Transportrichtung gesehen vor dem Walzen in dem ersten Walzgerüst größer als die jeweilige gedrückte Länge beim Walzen in dem ersten Walzgerüst, gilt dies daher zwangsläufig auch für die anderen Walzvorgängen. Selbst wenn dies jedoch nicht der Fall ist, wenn also ausnahmsweise beispielsweise die gedrückte Länge beim dritten Walzvorgang größer als die gedrückte Länge beim ersten Walzvorgang ist, ist dies in aller Regel unkritisch. Dies wird nachfolgend anhand eines Beispiels erläutert, bei dem angenommen wird, dass die Bearbeitungseinrichtung als Walzstraße mit beispielsweise vier Walzgerüsten ausgebildet ist. Denn auch wenn in einem derartigen Fall wird die Längserstreckung der jeweiligen Schweißnaht unmittelbar nach dem Herstellen der Schweißnaht kleiner als die gedrückte Länge ist, mit der die Metallbänder beispielsweise im zweiten Walzgerüst gewalzt wird, muss lediglich durch die Längung des Metallbandes durch das Walzen im ersten Walzgerüst gewährleistet sein, dass die Längserstreckung der jeweiligen Schweißnaht entsprechend vergrößert wird. Analoge Sachverhalte gelten für das Walzen im dritten und vierten bzw. allgemein jedem weiteren Walzgerüst.

Die Aufgabe wird weiterhin durch eine Bearbeitungsanlage für Metallbänder mit den Merkmalen des Anspruchs 5 gelöst. Vorteilhafte Ausgestaltungen der Bearbeitungsanlage sind Gegenstand der abhängigen Ansprüche 6 bis 8.

Erfindungsgemäß wird eine Bearbeitungsanlage der eingangs genannten Art dadurch ausgestaltet, dass die Schweißmaschine derart ausgebildet ist, dass
- vor dem Anschweißen der Vorderkante des jeweiligen Metallbandes an die Hinterkante des dem Bandspeicher teilweise zugeführten Metallbandes der Bandkopf des jeweiligen Metallbandes und der Bandfuß des dem Bandspeicher teilweise zugeführten Metallbandes leicht verdreht werden,
- sodann die beiden Bänder durch Bilden der Schweißnaht miteinander verbunden werden, wobei die Schweißnaht beim Schweißen als solchem ausschließlich quer zur Transportrichtung verläuft, und
- schließlich der Bandkopf des jeweiligen Metallbandes und der Bandfuß des dem Bandspeicher teilweise zugeführten Metallbandes wieder zurück verdreht werden, so dass die Schweißnaht nach dem Verdrehen der dann miteinander geschweißten Metallbänder diagonal zur Transportrichtung verläuft.

Der Begriff "Ausbildung der Schweißmaschine" im Sinne der vorliegenden Erfindung ist umfassend zu verstehen. Die durch die erfindungsgemäße Ausbildung der Schweißmaschine erzielbaren Vorteile korrespondieren mit denen des Bearbeitungsverfahrens.

Vorzugsweise ist die Schweißmaschine derart ausgebildet, dass zum Verdrehen des Bandkopfes des jeweiligen Metallbandes und des Bandfußes des dem Bandspeicher teilweise zugeführten Metallbandes in entsprechenden Bereichen des Bandkopfes des jeweiligen Metallbandes und des Bandfußes des dem Bandspeicher teilweise zugeführten Metallbandes Schlaufen gebildet werden. Die obigen Ausführungen zum Bearbeitungsverfahren sind in analoger Weise gültig.

Vorzugsweise ist die Bearbeitungseinrichtung als Walzwerk mit mindestens einem Walzgerüst ausgebildet.

Vorzugsweise ist ein Winkel, den die jeweilige Schweißnaht mit der Transportrichtung bildet, um ca. 5° bis 10° von 90° verschieden, insbesondere um 6° bis 8°.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Metallband,
- FIG 2 bis 5: eine Bearbeitungsanlage für Metallbänder in verschiedenen, zeitlich aufeinanderfolgenden Betriebszuständen,
- FIG 6: eine Draufsicht auf eine Schweißnaht und
- FIG 7: eine Draufsicht auf zwei Metallbänder vor dem Schweißen.

### Beschreibung der Ausführungsformen

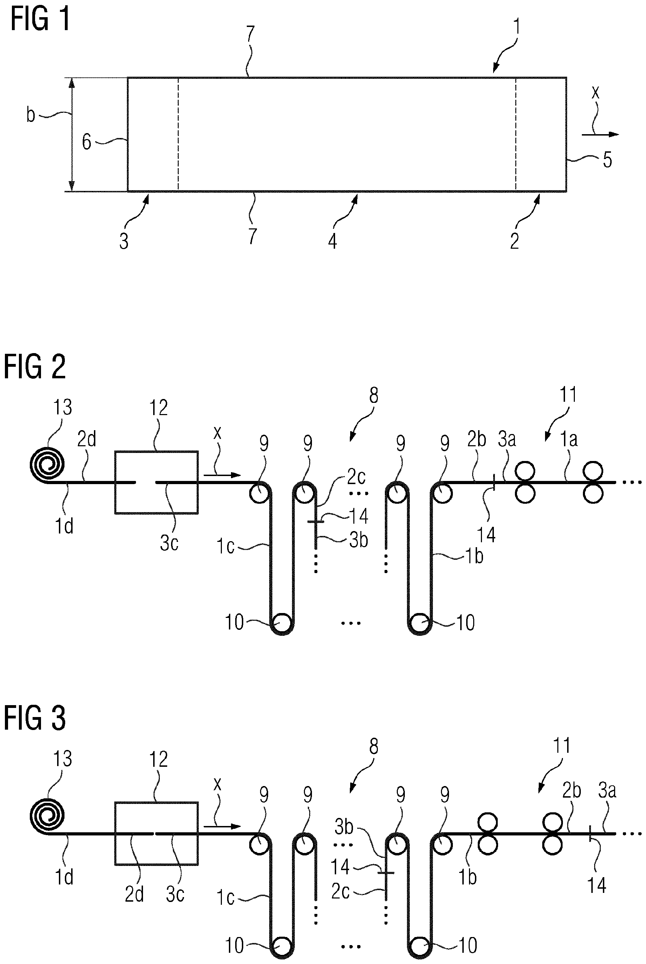

Metallbänder 1 sind gemäß FIG 1 langgestreckte flache Walzgüter. Die Metallbänder 1 werden - siehe hierzu später auch die weiteren FIG - in einer Transportrichtung x gefördert. Der vordere Bereich des jeweiligen Metallbandes 1 bildet den sogenannten Bandkopf 2, der hintere Bereich den sogenannten Bandfuß 3. Dazwischen befindet sich ein Mittelbereich des jeweiligen Metallbandes 1, das sogenannte Filetstück 4. Die genauen Grenzen vom Bandkopf 2 zum Filetstück 4 und vom Filetstück 4 zum Bandfuß 3 - in FIG 1 durch gestrichelte Linien angedeutet - sind von untergeordneter Bedeutung. Der jeweilige Bandkopf 2 endet an einer jeweiligen Vorderkante 5, der jeweilige Bandfuß 3 an einer jeweiligen Hinterkante 6. Zwischen der jeweiligen Vorderkante 5 und der jeweiligen Hinterkante 6 erstrecken sich jeweilige Seitenkanten 7 des Metallbandes 1. Die Seitenkanten 7 verlaufen parallel zur Transportrichtung x.

Die Metallbänder 1 sind in den weiteren FIG durch einen kleinen Buchstaben a, b usw. ergänzt, um sie im Rahmen der Beschreibung der vorliegenden Erfindung bei Bedarf voneinander unterscheiden zu können. Gleiches gilt für die verschiedenen Teile und Abschnitte der Metallbänder 1, beispielsweise die Bandköpfe 2 und die Bandfüße 3.

Gemäß FIG 2 weist eine Bearbeitungsanlage für die Metallbänder 1 einen Bandspeicher 8 auf. Der Bandspeicher 8 kann beispielsweise entsprechend der Darstellung in FIG 2 eine Anzahl von oberen Rollen 9 und unteren Rollen 10 aufweisen, wobei die Metallbänder 1 im Bandspeicher 8 abwechselnd über eine der oberen Rollen 9 und eine der unteren Rollen 10 geführt werden. Die oberen Rollen 9 können beispielsweise fest angeordnet sein, während die unteren Rollen 10 gegenüber den oberen Rollen 9 abgesenkt werden können. Je nach Ausmaß, in dem die unteren Rollen 10 abgesenkt sind, variiert die Menge an Metallband 1, die in dem Bandspeicher 2 gespeichert ist.

Die Bearbeitungsanlage weist weiterhin eine Bearbeitungseinrichtung 11 auf. Die Bearbeitungseinrichtung 11 kann beispielsweise entsprechend der Darstellung in FIG 1 als mehrgerüstige Walzstraße ausgebildet sein. In diesem Fall erfolgt in der Walzstraße in der Regel ein Kaltwalzen. Es sind aber auch andere Ausgestaltungen der Bearbeitungseinrichtung 11 möglich, sei es zusätzlich oder alternativ zu einer Walzstra-ße. Beispielsweise kann die Bearbeitungseinrichtung 11 eine Beize sein oder zusätzlich zur Walzstraße eine Beize umfassen. Im letztgenannten Fall ist Beize der Walzstraße vorgeordnet. Unabhängig von ihrer konkreten Ausgestaltung ist die Bearbeitungseinrichtung 11 jedoch dem Bandspeicher 8 nachgeordnet.

Schließlich weist die Bearbeitungsanlage eine Schweißmaschine 12 auf. Die Schweißmaschine 12 ist dem Bandspeicher 8 vorgeordnet.

Die Bearbeitungsanlage wird wie folgt betrieben:
Zu einem bestimmten Zeitpunkt ist im Bandspeicher 8 eine bestimmte Menge an Metallband 1 gespeichert. Beispielsweise sind in dem Zustand gemäß FIG 2 mit Ausnahme von dessen Bandfuß 3c das Metallband 1c und der Bandfuß 3b und ein Großteil des Filetstücks 4b des Metallbandes 1b gespeichert. Der Bandkopf 2b des Metallbandes 1b und das Metallband 1a haben den Bandspeicher 8 bereits verlassen. Konkret befindet sich der Bandkopf 2b des Metallbandes 1b noch auf dem Transport zur Bearbeitungseinrichtung 11, während das Metallband 1a sich bereits in der Bearbeitungseinrichtung 11 befindet oder die Bearbeitungseinrichtung 11 sogar schon wieder verlassen hat.

Der Bandfuß 3c des Metallbandes 1c befindet sich noch in der Schweißmaschine 12. An den Bandfuß 3c des Metallbandes 1c soll das Metallband 1d mit seinem Bandkopf 2d angesetzt werden. Zu diesem Zweck wird der Bandkopf 2b des Metallbandes 1d der Schweißmaschine 12 zugeführt. In der Regel wird zu diesem Zweck das Metallband 1d im entsprechenden Ausmaß von einem Haspel 13 abgehaspelt. Konkret erfolgt das Abhaspeln so weit, dass der Bandkopf 2d des Metallbandes 1d innerhalb der Schweißmaschine 12 in die unmittelbare Nähe des Bandfußes 2c des Metallbandes 1c gefahren wird. Die Vorderkante 5d des Metallbandes 1d grenzt somit entsprechend der Darstellung in FIG 3 mit äußerst geringem Abstand (maximal wenige Millimeter) an die Hinterkante 6c des Metallbandes 1c an.

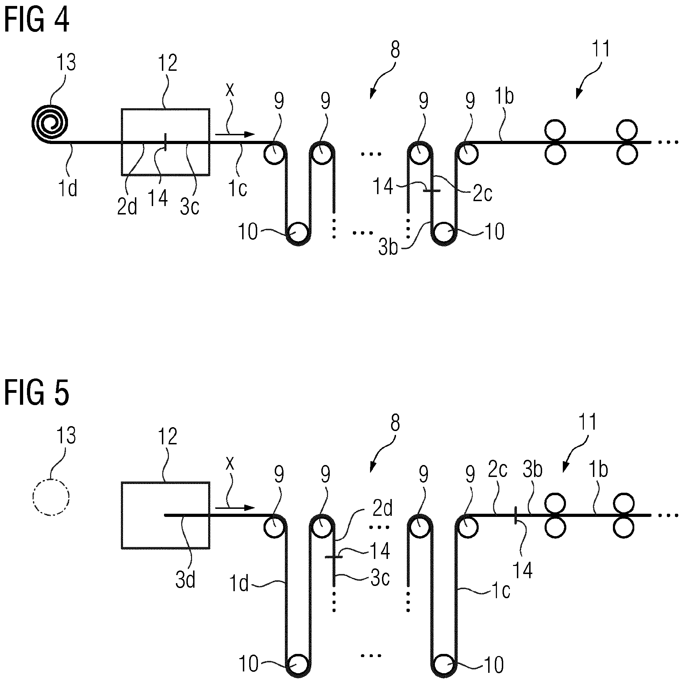

In diesem Zustand wird mittels der Schweißmaschine 12 die Vorderkante 5d des Metallbandes 1d an die Hinterkante 6c des Metallbandes 1c angeschweißt. Zwischen diesen beiden Kanten 5d, 6c bildet sich somit eine Schweißnaht 14. Durch das Schweißen ist das Metallband 1d Bestandteil eines Endlosbandes geworden, das zuvor nur die Metallbänder 1a, 1b und 1c umfasste. FIG 4 zeigt diesen Zustand. Nach dem Anschweißen werden der Bandfuß 3c des Metallbandes 1c sowie der Bandkopf 2d und das Filetstück 4d des Metallbandes 1d dem Bandspeicher 8 in der Transportrichtung x zugeführt. Das Zuführen des Metallbandes 1d erfolgt so weit, dass der Bandfuß 3d noch in der Schweißmaschine 12 verbleibt. FIG 5 zeigt den entsprechenden Zustand.

Soweit es das Zuführen der Metallbänder 1 zum Bandspeicher 8 betrifft, ist mit der obenstehend erläuterten Vorgehensweise ein vollständiger Zyklus abgeschlossen. Dieser Zyklus wird immer wieder wiederholt, so dass also immer wieder ein neues Metallband 1 an das vorherige Metallband 1 angeschweißt wird und dem Bandspeicher 8 zugeführt wird. Im Ergebnis werden dem Bandspeicher 8 somit die Metallbänder 1 intermittierend und sequenziell nacheinander zugeführt. Weiterhin - dies ergibt sich ganz von selbst - ist die Transportrichtung x für die Metallbänder 1 einheitlich und läuft jedes Metallband 1 zuerst mit seinem Bandkopf 2, dann mit seinem Filetstück 4 und schließlich mit seinem Bandfuß 3 in den Bandspeicher 8 ein.

Das Zuführen der im Bandspeicher 8 gespeicherten Metallbänder 1 (bzw. der entsprechenden Abschnitte des Endlosbandes) zur Bearbeitungseinrichtung 11 kann nach Bedarf erfolgen. Es ist im Einzelfall möglich, dass das Zuführen intermittierend erfolgt. In der Regel erfolgt es jedoch kontinuierlich. Auch dies ist aus den FIG 2 bis 5 ersichtlich.

Insbesondere befinden sich die Schweißnähte 14 zwischen den Metallbändern 1a und 1b sowie den Metallbändern 1b und 1c in dem Zustand gemäß FIG 2 an bestimmten Stellen und befinden sich weiterhin die unteren Rollen 10 auf einem bestimmten Höhenniveau, welches wiederum mit dem Füllgrad des Bandspeichers 8 korrespondiert. Bis zum Heranführen des Bandkopfes 2d des Metallbandes 1d an den Bandfuß 3c des Metallbandes 1c - dargestellt in FIG 3 - vergeht eine Zeitspanne. Auch während dieser Zeitspanne erfolgen in der Regel ein Ausfördern des Endlosbandes aus dem Bandspeicher 8 und hiermit verbunden ein Zuführen des Endlosbandes zur Bearbeitungseinrichtung 11. Gegenüber dem in FIG 2 dargestellten Zustand hat sich der Ort des Bandfußes 3c aber nicht geändert. Durch das Ausfördern des Endlosbandes aus dem Bandspeicher 8 hat sich somit der Füllgrad des Bandspeichers 8 verringert. Hiermit korrespondierend sind die unteren Rollen 10 gegenüber dem Zustand von FIG 2 angehoben. Weiterhin haben sich die Orte geändert, an denen sich die Schweißnähte 14 zwischen den Metallbändern 1a und 1b sowie den Metallbändern 1b und 1c befinden.

In ähnlicher Weise wird auch zum Bilden der Schweißnaht 14 zwischen den Metallbändern 1c und 1d - dargestellt in FIG 4 - eine Zeitspanne benötigt. Auch während dieser Zeitspanne erfolgen ein Ausfördern des Endlosbandes aus dem Bandspeicher 8 und hiermit verbunden ein Zuführen des Endlosbandes zur Bearbeitungseinrichtung 11. Gegenüber dem in FIG 3 dargestellten Zustand hat sich der Ort des Bandfußes 3c nach wie vor nicht geändert. Durch das Ausfördern des Endlosbandes aus dem Bandspeicher 8 hat sich jedoch der Füllgrad des Bandspeichers 8 noch weiter verringert. Hiermit korrespondierend sind die unteren Rollen 10 gegenüber dem Zustand von FIG 2 noch weiter angehoben. Auch haben sich gegenüber dem Zustand in FIG 3 wieder die Orte geändert, an denen sich die Schweißnähte 14 zwischen den Metallbändern 1a und 1b sowie den Metallbändern 1b und 1c befinden.

Auch für das Zuführen des Bandfußes 3c des Metallbandes 1c sowie des Bandkopfes 2d und des Filetstücks 4d des Metallbandes 1d zum Bandspeicher 8 wird eine bestimmte Zeitspanne benötigt. Es haben sich daher wieder die Orte geändert, an denen sich die Schweißnähte 14 zwischen den Metallbändern 1a und 1b sowie den Metallbändern 1b und 1c befinden. Das Zuführen des Bandfußes 3c des Metallbandes 1c sowie des Bandkopfes 2d und des Filetstücks 4d des Metallbandes 1d zum Bandspeicher 8 erfolgt jedoch mit einer höheren Geschwindigkeit als das Ausfördern des Endlosbandes aus dem Bandspeicher 8. Durch das Zuführen des Bandfußes 3c des Metallbandes 1c sowie des Bandkopfes 2d und des Filetstücks 4d des Metallbandes 1d zum Bandspeicher 8 wird somit trotz des gleichzeitigen Ausförderns des Endlosbandes aus dem Bandspeicher 8 der Füllgrad des Bandspeichers 8 erhöht. Hiermit korrespondierend sind die unteren Rollen 10 gegenüber dem Zustand von FIG 4 abgesenkt, in der Regel auf das gleiche oder zumindest ein ähnliches Niveau wie bei FIG 2.

Analog zum Zuführen der Metallbänder 1 zum Bandspeicher 8 - dies ergibt sich ganz von selbst - wird ersichtlich jedes Metallband 1 zuerst mit seinem Bandkopf 2, dann mit seinem Filetstück 4 und schließlich mit seinem Bandfuß 3 der Bearbeitungseinrichtung 11 zugeführt.

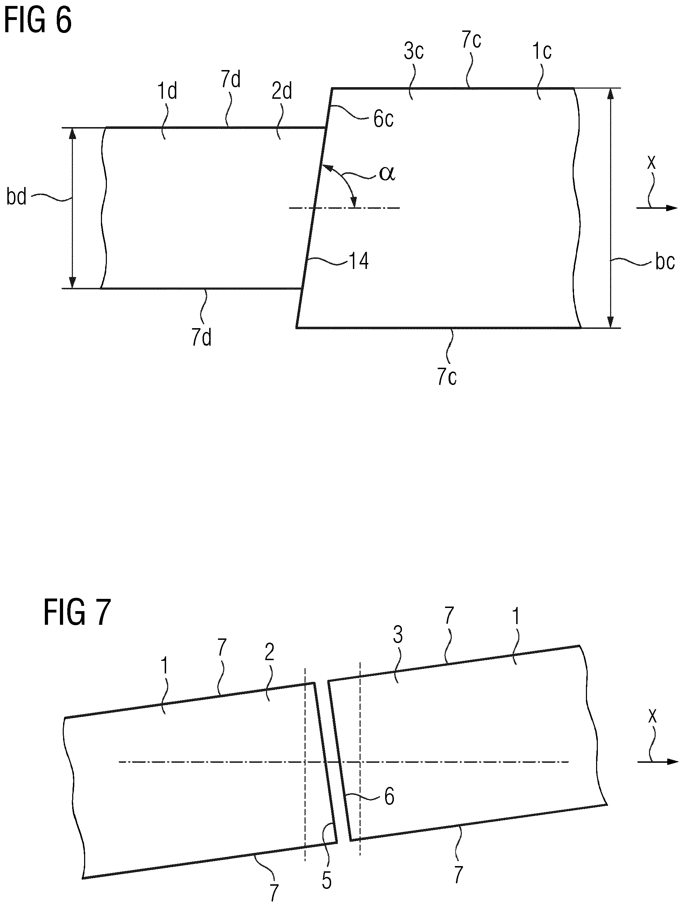

Nachfolgend wird in Verbindung mit FIG 6 die Ausgestaltung der Schweißnaht 14 zwischen den Metallbändern 1c und 1d erläutert. Die entsprechenden Ausführungen sind jedoch 1:1 auch auf die Schweißnähte 14 zwischen anderen Metallbändern 1 übertragbar.

In der Regel werden die Metallbänder 1c, 1d gemäß FIG 6 mittig aneinander angesetzt. In diesem Fall erstreckt sich die Schweißnaht 14 unabhängig davon, ob die Metallbänder 1c, 1d dieselbe Bandbreite bc, bd oder voneinander verschiedene Bandbreiten bc, bd aufweisen, von der Seitenkante 7c, 7d eines der beiden Metallbänder 1c, 1d zur anderen Seitenkante 7c, 7d desselben Metallbandes 1c, 1d. Auch im Falle einer außermittigen Verbindung der Metallbänder 1c, 1d kann dieser Fall auftreten. Im Falle einer außermittigen Verbindung der Metallbänder 1c, 1d ist es jedoch möglich, dass sich die Schweißnaht 14 von der Seitenkante 7c, 7d eines der beiden Metallbänder 1c, 1d zu einer Seitenkante 7d, 7c des anderen Metallbandes 1d, 1c erstreckt. Unabhängig davon, ob der eine oder der andere Fall realisiert ist, ist jedoch ein Winkel α, den die Schweißnaht 14 mit der Transportrichtung x bildet, zumindest abschnittweise von 90° verschieden. Die Schweißmaschine 12 ist derart ausgebildet, dass sie diese Schweißnaht 14 bilden kann, und wird auch so betrieben.

Das Ausmaß, um welches der Winkel α von 90° verschieden ist, kann nach Bedarf bestimmt sein. Beispielsweise kann die Abweichung von 90° bei ca. 5° bis 10° liegen, insbesondere zwischen 6° und 8°.

Der Schweißvorgang als solches und auch das Vorbereiten der Vorderkante 5 des einen Metallbandes 1 und der Hinterkante 6 des anderen Metallbandes 1 müssen nicht näher erläutert werden.

Konkret für einen diagonalen Verlauf der Schweißnaht 14 ist es weiterhin möglich, durch Klemmen entsprechender Bereiche des Bandkopfes 2 des einen Metallbandes 1 und des Bandfußes 3 des anderen Metallbandes 1 und ein Bilden von Schlaufen erreicht, dass die Metallbänder 1 in der Schweißmaschine 12 unter dem Winkel α schräg verlaufen. FIG 7 zeigt diesen Zustand der Metallbänder 1. In diesem Zustand können sodann in völlig konventioneller Art und Weise die Vorderkante 5 des einen Metallbandes 1 und die Hinterkante 6 des anderen Metallbandes 1 vorbereitet werden. Das Abschneiden - angedeutet in FIG 7 durch gestrichelte Linien - kann in ebenfalls völlig konventioneller Art und Weise orthogonal zur Transportrichtung x erfolgen. Auch das Schweißen kann in ebenfalls völlig konventioneller Art und Weise orthogonal zur Transportrichtung x erfolgen. Aufgrund des Umstands, dass der Bandkopf 2 des einen Metallbandes 1 und des Bandfuß 3 des anderen Metallbandes 1 während des Schweißvorgangs unter dem Winkel α schräg verlaufen, sich nach dem Schweißen jedoch wieder in der Transportrichtung x ausrichten (siehe FIG 6), verläuft nach dem Schweißen die Schweißnaht 14 unter dem Winkel α.

Die vorliegende Erfindung weist viele Vorteile auf. Insbesondere wirkt die Bearbeitungseinrichtung 11 aufgrund des Verlaufs der Schweißnähte 14 zu einem bestimmten Zeitpunkt nicht über die gesamte Breite der Schweißnähte 14 auf die Schweißnähte 14, sondern jeweils nur über einen Teilbereich. Dadurch wird zu jedem Zeitpunkt jeweils nur ein Teilbereich der jeweiligen Schweißnaht 14 der Bearbeitung unterzogen. Insbesondere in Streckrichtern und Walzwerken ist ein Variieren des Bearbeitungsprozesses für die Schweißnähte 14 nicht mehr erforderlich. Abmaßlängen, die als Ausschuss aussortiert werden müssen, können dadurch reduziert werden. Das Ausbringen kann somit erhöht werden. Das Risiko eines Bandrisses kann auf nahezu Null abgesenkt werden. Als weiterer positiver Effekt ergibt sich, dass Wartungsintervalle der Schweißmaschine 12 vergrößert werden können und sich auch die Wartung der Schweißmaschine 12 vereinfacht. Stillstandzeiten der Bearbeitungsanlage können dadurch reduziert werden, was ebenfalls die Produktivität steigert. Weiterhin können auch konventionelle Schweißmaschinen 12 entsprechend nachgerüstet werden, dass sie einen diagonalen Verlauf der Schweißnaht 14 herstellen können.

### Bezugszeichenliste

- 1: Metallbänder
- 2: Bandköpfe
- 3: Bandfüße
- 4: Filetstücke
- 5: Vorderkanten
- 6: Hinterkanten
- 7: Seitenkanten
- 8: Bandspeicher
- 9: obere Rollen
- 10: untere Rollen
- 11: Bearbeitungseinrichtung
- 12: Schweißmaschine
- 13: Abhaspel
- 14: Schweißnähte

- b: Bandbreiten
- x: Transportrichtung

- α: Winkel

## Patentansprüche

1. Bearbeitungsverfahren für Metallbänder (1),
- wobei einem Bandspeicher (8) einer Bearbeitungsanlage für die Metallbänder (1) intermittierend und sequenziell nacheinander in einer für die Metallbänder (1) einheitlichen Transportrichtung (x) jeweils ein Metallband (1) zugeführt wird,
- wobei das jeweilige Metallband (1) einen jeweiligen Bandkopf (2), einen jeweiligen Bandfuß (3) sowie zwischen dem jeweiligen Bandkopf (2) und dem jeweiligen Bandfuß (3) ein jeweiliges Filetstück (4) aufweist,
- wobei das jeweilige Metallband (1) zuerst mit dem jeweiligen Bandkopf (2), sodann dem jeweiligen Filetstück (4) und schließlich dem jeweiligen Bandfuß (3) in den Bandspeicher (8) einläuft,
- wobei der jeweilige Bandkopf (2) eine jeweilige Vorderkante (5) und der jeweilige Bandfuß (3) eine jeweilige Hinterkante (6) aufweist,
- wobei die jeweilige Vorderkante (5) unmittelbar vor dem Zuführen des jeweiligen Metallbandes (1) zum Bandspeicher (8) mittels einer Schweißmaschine (12) der Bearbeitungsanlage an die Hinterkante (6) eines dem Bandspeicher (8) jeweils unmittelbar zuvor teilweise zugeführten Metallbandes (1) angeschweißt wird, so dass sich zwischen der Vorderkante (5) des jeweiligen Metallbandes (1) und der Hinterkante (6) des jeweils unmittelbar zuvor teilweise zugeführten Metallbandes (1) eine jeweilige Schweißnaht (14) bildet,
- wobei die jeweilige Schweißnaht (14) sich quer zur Transportrichtung (x) gesehen von einer in Transportrichtung (x) verlaufenden Seitenkante (7) eines der beiden beteiligten Metallbänder (1) zur anderen Seitenkante (7) desselben Metallbandes (1) oder zu einer Seitenkante (7) des anderen Metallbandes (1) erstreckt,
- wobei die im Bandspeicher (8) gespeicherten Metallbänder (1) einschließlich der die Metallbänder (1) verbindenden Schweißnähte (14) von dem Bandspeicher (8) kontinuierlich oder intermittierend einer Bearbeitungseinrichtung (11) der Bearbeitungsanlage zugeführt werden,
- wobei der Bearbeitungseinrichtung (11) jeweils zunächst der Bandkopf (2), sodann das Filetstück (4) und erst danach der Bandfuß (3) des jeweiligen Metallbandes (1) zugeführt werden,
**dadurch gekennzeichnet,**
**dass** die Schweißmaschine (12) derart betrieben wird, dass
- vor dem Anschweißen der Vorderkante (5) des jeweiligen Metallbandes (1) an die Hinterkante (6) des dem Bandspeicher (8) teilweise zugeführten Metallbandes (1) der Bandkopf (2) des jeweiligen Metallbandes (1) und der Bandfuß (3) des dem Bandspeicher (8) teilweise zugeführten Metallbandes (1) leicht verdreht werden,
- sodann die beiden Bänder (1) durch Bilden der Schweißnaht (14) miteinander verbunden werden, wobei die Schweißnaht (14) beim Schweißen als solchem ausschließlich quer zur Transportrichtung (x) verläuft, und
- schließlich der Bandkopf (2) des jeweiligen Metallbandes (1) und der Bandfuß (3) des dem Bandspeicher (8) teilweise zugeführten Metallbandes (1) wieder zurück verdreht werden, so dass die Schweißnaht (14) nach dem Verdrehen der dann miteinander geschweißten Metallbänder (1) diagonal zur Transportrichtung (x) verläuft.

2. Bearbeitungsverfahren nach Anspruch 1,
**dadurch gekennzeichnet,**
**dass** die Schweißmaschine (12) derart betrieben wird, dass zum Verdrehen des Bandkopfes (2) des jeweiligen Metallbandes (1) und des Bandfußes (3) des dem Bandspeicher (8) teilweise zugeführten Metallbandes (1) in entsprechenden Bereichen des Bandkopfes (2) des jeweiligen Metallbandes (1) und des Bandfußes (3) des dem Bandspeicher (8) teilweise zugeführten Metallbandes (1) Schlaufen gebildet werden.

3. Bearbeitungsverfahren nach Anspruch 1 oder 2,
**dadurch gekennzeichnet,**
**dass** die Bearbeitungseinrichtung (11) als Walzwerk mit mindestens einem Walzgerüst ausgebildet ist, dass die Metallbänder (1) in den Walzgerüsten der Bearbeitungseinrichtung (11) mit einer jeweiligen gedrückten Länge gewalzt werden und dass eine Längserstreckung, welche die jeweilige Schweißnaht (14) in Transportrichtung (x) gesehen vor dem Walzen in dem jeweiligen Walzgerüst aufweist, größer als die jeweilige gedrückte Länge ist.

4. Bearbeitungsverfahren nach Anspruch 1, 2 oder 3,
**dadurch gekennzeichnet,**
**dass** ein Winkel (α), den die jeweilige Schweißnaht (14) mit der Transportrichtung (x) bildet, um ca. 5° bis 10° von 90° verschieden ist, insbesondere um 6° bis 8°.

5. Bearbeitungsanlage für Metallbänder (1),
- wobei die Bearbeitungsanlage einen Bandspeicher (8) aufweist, dem intermittierend und sequenziell nacheinander in einer für die Metallbänder (1) einheitlichen Transportrichtung (x) jeweils ein Metallband (1) zugeführt wird,
- wobei das jeweilige Metallband (1) einen jeweiligen Bandkopf (2), einen jeweiligen Bandfuß (3) sowie zwischen dem jeweiligen Bandkopf (2) und dem jeweiligen Bandfuß (3) ein jeweiliges Filetstück (4) aufweist,
- wobei das jeweilige Metallband (1) zuerst mit dem jeweiligen Bandkopf (2), sodann dem jeweiligen Filetstück (4) und schließlich dem jeweiligen Bandfuß (3) in den Bandspeicher (8) einläuft,
- wobei der jeweilige Bandkopf (2) eine jeweilige Vorderkante (5) und der jeweilige Bandfuß (3) eine jeweilige Hinterkante (6) aufweist,
- wobei die Bearbeitungsanlage eine dem Bandspeicher (8) vorgeordnete Schweißmaschine (12) aufweist, mittels derer die Vorderkante (5) des jeweiligen Metallbandes (1) unmittelbar vor dem Zuführen des jeweiligen Metallbandes (1) zum Bandspeicher (8) an die Hinterkante (6) eines dem Bandspeicher (8) jeweils unmittelbar zuvor teilweise zugeführten Metallbandes (1) angeschweißt wird, so dass sich zwischen der Vorderkante (5) des jeweiligen Metallbandes (1) und der Hinterkante (6) des jeweils unmittelbar zuvor teilweise zugeführten Metallbandes (1) eine jeweilige Schweißnaht (14) bildet,
- wobei die jeweilige Schweißnaht (14) sich quer zur Transportrichtung (x) gesehen von einer in Transportrichtung (x) verlaufenden Seitenkante (7) eines der beiden beteiligten Metallbänder (1) zur anderen Seitenkante (7) desselben Metallbandes (1) oder zu einer Seitenkante (7) des anderen Metallbandes (1) erstreckt,
- wobei die im Bandspeicher (8) gespeicherten Metallbänder (1) einschließlich der die Metallbänder (1) verbindenden Schweißnähte (14) von dem Bandspeicher (8) kontinuierlich oder intermittierend einer Bearbeitungseinrichtung (11) der Bearbeitungsanlage zugeführt werden,
- wobei der Bearbeitungseinrichtung (11) jeweils zunächst der Bandkopf (2), sodann das Filetstück (4) und erst danach der Bandfuß (3) des jeweiligen Metallbandes (1) zugeführt werden,
**dadurch gekennzeichnet,**
**dass** die Schweißmaschine (12) derart ausgebildet ist, dass
- vor dem Anschweißen der Vorderkante (5) des jeweiligen Metallbandes (1) an die Hinterkante (6) des dem Bandspeicher (8) teilweise zugeführten Metallbandes (1) der Bandkopf (2) des jeweiligen Metallbandes (1) und der Bandfuß (3) des dem Bandspeicher (8) teilweise zugeführten Metallbandes (1) leicht verdreht werden,
- sodann die beiden Bänder (1) durch Bilden der Schweißnaht (14) miteinander verbunden werden, wobei die Schweißnaht (14) beim Schweißen als solchem ausschließlich quer zur Transportrichtung (x) verläuft, und
- schließlich der Bandkopf (2) des jeweiligen Metallbandes (1) und der Bandfuß (3) des dem Bandspeicher (8) teilweise zugeführten Metallbandes (1) wieder zurück verdreht werden, so dass die Schweißnaht (14) nach dem Verdrehen der dann miteinander geschweißten Metallbänder (1) diagonal zur Transportrichtung (x) verläuft.

6. Bearbeitungsanlage nach Anspruch 5,
**dadurch gekennzeichnet,**
**dass** die Schweißmaschine (12) derart ausgebildet ist, dass zum Verdrehen des Bandkopfes (2) des jeweiligen Metallbandes (1) und des Bandfußes (3) des dem Bandspeicher (8) teilweise zugeführten Metallbandes (1) in entsprechenden Bereichen des Bandkopfes (2) des jeweiligen Metallbandes (1) und des Bandfußes (3) des dem Bandspeicher (8) teilweise zugeführten Metallbandes (1) Schlaufen gebildet werden.

7. Bearbeitungsanlage nach Anspruch 5 oder 6,
**dadurch gekennzeichnet,**
**dass** die Bearbeitungseinrichtung (11) als Walzwerk mit mindestens einem Walzgerüst ausgebildet ist.

8. Bearbeitungsanlage nach Anspruch 5, 6 oder 7,
**dadurch gekennzeichnet,**
**dass** ein Winkel (α), den die jeweilige Schweißnaht (14) mit der Transportrichtung (x) bildet, um ca. 5° bis 10° von 90° verschieden ist, insbesondere um 6° bis 8°.

## Claims

1. Processing method for metal strips (1),
- wherein a metal strip (1) is in each case fed to a strip accumulator (8) of a processing plant for the metal strips (1) intermittently and sequentially in succession in a transport direction (x) that is uniform for the metal strips (1),
- wherein the respective metal strip (1) has a respective strip head (2), a respective strip tail (3) and a respective fillet piece (4) between the respective strip head (2) and the respective strip tail (3),
- wherein the respective metal strip (1) enters the strip accumulator (8) first with the respective strip head (2), then the respective fillet piece (4) and finally the respective strip tail (3),
- wherein the respective strip head (2) has a respective leading edge (5) and the respective strip tail (3) has a respective trailing edge (6),
- wherein, immediately before the respective metal strip (1) is fed to the strip accumulator (8), the respective leading edge (5) is welded by means of a welding machine (12) of the processing plant to the trailing edge (6) of a metal strip (1) which has in each case been partially fed to the strip accumulator (8) immediately beforehand, with the result that a respective weld seam (14) is formed between the leading edge (5) of the respective metal strip (1) and the trailing edge (6) of the metal strip (1) which has in each case been partially fed in immediately beforehand,
- wherein, when viewed transversely to the transport direction (x), the respective weld seam (14) extends from a lateral edge (7), running in the transport direction (x), of one of the two metal strips (1) involved to the other lateral edge (7) of the same metal strip (1) or to a lateral edge (7) of the other metal strip (1),
- wherein the metal strips (1) stored in the strip accumulator (8), including the weld seams (14) connecting the metal strips (1), are fed continuously or intermittently from the strip accumulator (8) to a processing device (11) of the processing plant,
- wherein in each case first the strip head (2), then the fillet piece (4) and only then the strip tail (3) of the respective metal strip (1) are fed to the processing device (11),
**characterized**
**in that** the welding machine (12) is operated in such a way that,
- before the leading edge (5) of the respective metal strip (1) is welded to the trailing edge (6) of the metal strip (1) partially fed to the strip accumulator (8), the strip head (2) of the respective metal strip (1) and the strip tail (3) of the metal strip (1) partially fed to the strip accumulator (8) are slightly rotated,
- the two strips (1) are then connected to one another by forming the weld seam (14), wherein, during welding as such, the weld seam (14) runs exclusively transversely to the transport direction (x), and
- finally, the strip head (2) of the respective metal strip (1) and the strip tail (3) of the metal strip (1) partially fed to the strip accumulator (8) are rotated back again, with the result that, after the rotation of the metal strips (1), which are then welded to one another, the weld seam (14) runs diagonally with respect to the transport direction (x).

2. Processing method according to Claim 1,
**characterized**
**in that** the welding machine (12) is operated in such a way that loops are formed in corresponding regions of the strip head (2) of the respective metal strip (1) and of the strip tail (3) of the metal strip (1) partially fed to the strip accumulator (8) in order to rotate the strip head (2) of the respective metal strip (1) and the strip tail (3) of the metal strip (1) partially fed to the strip accumulator (8).

3. Processing method according to Claim 1 or 2,
**characterized**
**in that** the processing device (11) is designed as a rolling mill having at least one roll stand, in that the metal strips (1) are rolled with a respective compressed length in the roll stands of the processing device (11), and in that a longitudinal extent which the respective weld seam (14) has, when viewed in the transport direction (x), before rolling in the respective roll stand, is greater than the respective compressed length.

4. Processing method according to Claim 1, 2 or 3,
**characterized**
**in that** an angle (α) formed by the respective weld seam (14) with the transport direction (x) differs by approximately 5° to 10° from 90°, in particular by 6° to 8°.

5. Processing plant for metal strips (1),
- wherein the processing plant has a strip accumulator (8), to which a metal strip (1) is in each case fed intermittently and sequentially in succession in a transport direction (x) that is uniform for the metal strips (1),
- wherein the respective metal strip (1) has a respective strip head (2), a respective strip tail (3) and a respective fillet piece (4) between the respective strip head (2) and the respective strip tail (3),
- wherein the respective metal strip (1) first enters the strip accumulator (8) with the respective strip head (2), then the respective fillet piece (4) and finally the respective strip tail (3),
- wherein the respective strip head (2) has a respective leading edge (5) and the respective strip tail (3) has a respective trailing edge (6),
- wherein the processing plant has a welding machine (12), which is arranged upstream of the strip accumulator (8) and by means of which, immediately before the respective metal strip (1) is fed to the strip accumulator (8), the leading edge (5) of the respective metal strip (1) is welded to the trailing edge (6) of a metal strip (1) which has in each case been partially fed to the strip accumulator (8) immediately beforehand, with the result that a respective weld seam (14) is formed between the leading edge (5) of the respective metal strip (1) and the trailing edge (6) of the metal strip (1) which has in each case been partially fed in immediately beforehand,
- wherein, when viewed transversely to the transport direction (x), the respective weld seam (14) extends from a lateral edge (7), running in the transport direction (x), of one of the two metal strips (1) involved to the other lateral edge (7) of the same metal strip (1) or to a lateral edge (7) of the other metal strip (1),
- wherein the metal strips (1) stored in the strip accumulator (8), including the weld seams (14) connecting the metal strips (1), are fed continuously or intermittently from the strip accumulator (8) to a processing device (11) of the processing plant,
- wherein in each case first the strip head (2), then the fillet piece (4) and only then the strip tail (3) of the respective metal strip (1) are fed to the processing device (11),
**characterized**
**in that** the welding machine (12) is designed in such a way that,
- before the leading edge (5) of the respective metal strip (1) is welded to the trailing edge (6) of the metal strip (1) partially fed to the strip accumulator (8), the strip head (2) of the respective metal strip (1) and the strip tail (3) of the metal strip (1) partially fed to the strip accumulator (8) are slightly rotated,
- the two strips (1) are then connected to one another by forming the weld seam (14), wherein, during welding as such, the weld seam (14) runs exclusively transversely to the transport direction (x), and
- finally, the strip head (2) of the respective metal strip (1) and the strip tail (3) of the metal strip (1) partially fed to the strip accumulator (8) are rotated back again, with the result that, after the rotation of the metal strips (1), which are then welded to one another, the weld seam (14) runs diagonally with respect to the transport direction (x).

6. Processing plant according to Claim 5,
**characterized**
**in that** the welding machine (12) is designed in such a way that loops are formed in corresponding regions of the strip head (2) of the respective metal strip (1) and of the strip tail (3) of the metal strip (1) partially fed to the strip accumulator (8) in order to rotate the strip head (2) of the respective metal strip (1) and the strip tail (3) of the metal strip (1) partially fed to the strip accumulator (8).

7. Processing plant according to Claim 5 or 6,
**characterized**
**in that** the processing device (11) is designed as a rolling mill having at least one roll stand.

8. Processing plant according to Claim 5, 6 or 7,
**characterized**
**in that** an angle (α) formed by the respective weld seam (14) with the transport direction (x) differs by approximately 5° to 10° from 90°, in particular by 6° to 8°.

## Revendications

1. Procédé de traitement de bandes métalliques (1),
- dans lequel une bande métallique (1) est respectivement amenée, de façon intermittente et successivement l'une après l'autre, à un magasin de bandes (8) d'une installation de traitement des bandes métalliques (1), dans une direction de transport uniforme (x) pour les bandes métalliques (1),
- dans lequel la bande métallique respective (1) comprend une tête de bande (2) respective, un pied de bande respectif (3) ainsi qu'une pièce de bande respective (4) entre la tête de bande respective (2) et le pied de bande respectif (3),
- dans lequel la bande métallique respective (1) entre dans le magasin de bandes (8) d'abord avec la tête de bande respective (2), ensuite avec la pièce de bande respective (4) et enfin avec le pied de bande respectif (3),
- dans lequel la tête de bande respective (2) comprend un bord avant respectif (5) et le pied de bande respectif (3) comprend un bord arrière respectif (6),
- dans lequel le bord avant respectif (5) est soudé juste avant l'amenée de la bande métallique respective (1) au magasin de bandes (8), au moyen d'une machine à souder (12) de l'installation de traitement, au bord arrière (6) d'une bande métallique (1) amenée respectivement en partie immédiatement avant au magasin de bandes (8), de sorte qu'un cordon de soudure (14) respectif est formé entre le bord avant (5) de la bande métallique respective (1) et le bord arrière (6) de la bande métallique (1) amenée respectivement en partie immédiatement avant,
- dans lequel le cordon de soudure respectif (14) s'étend transversalement à la direction de transport (x), vu d'un bord latéral (7) s'étendant dans la direction de transport (x) d'une des deux bandes métalliques (1) concernées vers l'autre bord latéral (7) de la même bande métallique (1) ou vers un bord latéral (7) de l'autre bande métallique (1),
- dans lequel les bandes métalliques (1), incluant les cordons de soudure (14) reliant les bandes métalliques (1), stockées dans le magasin de bandes (8) sont amenées de façon continue ou intermittente du magasin de bandes (8) à un dispositif de traitement (11) de l'installation de traitement,
- dans lequel d'abord la tête de bande (2), ensuite la pièce de bande (4) et seulement ensuite le pied de bande (3) de la bande métallique respective (1) sont amenés respectivement au dispositif de traitement (11),
**caractérisé en ce que** la machine à souder (12) est actionnée de la manière suivante :
- avant le soudage du bord avant (5) de la bande métallique respective (1) sur le bord arrière (6) de la bande métallique (1) amenée en partie au magasin de bandes (8), la tête de bande (2) de la bande métallique respective (1) et le pied de bande (3) de la bande métallique (1) amenée en partie au magasin de bandes (8) sont légèrement tournés,
- ensuite, les deux bandes (1) sont reliées l'une à l'autre par la formation du cordon de soudure (14), dans lequel le cordon de soudure (14) lors du soudage s'étend en tant que tel exclusivement transversalement à la direction de transport (x), et
- enfin, la tête de bande (2) de la bande métallique respective (1) et le pied de bande (3) de la bande métallique (1) amenée en partie au magasin de bandes (8) sont à nouveau tournés dans l'autre sens, de sorte que le cordon de soudure (14) s'étend, après la rotation des bandes métalliques (1) soudées alors l'une à l'autre, en diagonale par rapport à la direction de transport (x).

2. Procédé de traitement selon la revendication 1,
**caractérisé en ce que** la machine à souder (12) est actionnée de telle sorte que, pour tourner la tête de bande (2) de la bande métallique respective (1) et le pied de bande (3) de la bande métallique (1) amenée en partie au magasin de bandes (8), des boucles sont formées dans des régions correspondantes de la tête de bande (2) de la bande métallique respective (1) et du pied de bande (3) de la bande métallique (1) amenée en partie au magasin de bandes (8) .

3. Procédé de traitement selon la revendication 1 ou 2,
**caractérisé en ce que** le dispositif de traitement (11) est conçu sous forme d'un laminoir comprenant au moins une cage de laminoir,
**en ce que** les bandes métalliques (1) sont laminées dans les cages de laminoir du dispositif de traitement (11) avec une longueur pressée respective, et
**en ce qu'**une dimension longitudinale, qui comprend le cordon de soudure (14) respectif dans la direction de transport (x) vue avant le laminage dans la cage de laminoir respective, est supérieure à la longueur pressée respective.

4. Procédé de traitement selon la revendication 1, 2 ou 3,
**caractérisé en ce qu'**un angle (α), que le cordon de soudure (14) respectif forme avec la direction de transport (x), diffère d'environ 5° à 10° par rapport à 90°, en particulier de 6° à 8°.

5. Installation de traitement de bandes métalliques (1),
- dans laquelle l'installation de traitement comprend un magasin de bandes (8), auquel une bande métallique (1) est respectivement amenée, de façon intermittente et successivement l'une après l'autre dans une direction de transport uniforme (x) pour les bandes métalliques (1),
- dans laquelle la bande métallique respective (1) comprend une tête de bande (2) respective, un pied de bande respectif (3) ainsi qu'une pièce de bande respective (4) entre la tête de bande respective (2) et le pied de bande respectif (3),
- dans laquelle la bande métallique respective (1) entre dans le magasin de bandes (8) d'abord avec la tête de bande respective (2), ensuite avec la pièce de bande respective (4) et enfin avec le pied de bande respectif (3),
- dans laquelle la tête de bande respective (2) comprend un bord avant respectif (5) et le pied de bande respectif (3) comprend un bord arrière respectif (6),
- dans laquelle l'installation de traitement comprend une machine à souder (12) disposée en amont du magasin à bandes (8), au moyen de laquelle le bord avant respectif (5) de la bande métallique (1) respective est soudé juste avant l'amenée de la bande métallique respective (1) au magasin de bandes (8) sur le bord arrière (6) d'une bande métallique (1) amenée respectivement en partie immédiatement avant au magasin de bandes (8), de sorte qu'un cordon de soudure (14) respectif est formé entre le bord avant (5) de la bande métallique respective (1) et le bord arrière (6) de la bande métallique (1) amenée respectivement en partie immédiatement avant,
- dans laquelle le cordon de soudure respectif (14) s'étend transversalement à la direction de transport (x), vu d'un bord latéral (7) s'étendant dans la direction de transport (x) d'une des deux bandes métalliques (1) concernées vers l'autre bord latéral (7) de la même bande métallique (1) ou un bord latéral (7) de l'autre bande métallique (1),
- dans laquelle les bandes métalliques (1) incluant les cordons de soudure (14) reliant les bandes métalliques (1) stockées dans le magasin de bandes (8) sont amenées de façon continue ou intermittente du magasin de bandes (8) à un dispositif de traitement (11) de l'installation de traitement,
- dans laquelle d'abord la tête de bande (2), ensuite la pièce de bande (4) et seulement ensuite le pied de bande (3) de la bande métallique respective (1) sont amenés respectivement au dispositif de traitement (11),
**caractérisée en ce que** la machine à souder (12) est configurée de sorte
- qu'avant le soudage du bord avant (5) de la bande métallique respective (1) au bord arrière (6) de la bande métallique (1) amenée en partie au magasin de bandes (8), la tête de bande (2) de la bande métallique respective (1) et le pied de bande (3) de la bande métallique (1) amenée en partie au magasin de bandes (8) sont légèrement tournés,
- qu'ensuite, les deux bandes (1) sont reliées l'une à l'autre par la formation du cordon de soudure (14), dans lequel le cordon de soudure (14) lors du soudage s'étend en tant que tel exclusivement transversalement à la direction de transport (x), et
- qu'enfin, la tête de bande (2) de la bande métallique respective (1) et le pied de bande (3) de la bande métallique (1) amenée en partie au magasin de bandes (8) sont à nouveau tournés dans l'autre sens, de sorte que le cordon de soudure (14) s'étend, après la rotation des bandes métalliques (1) soudées alors l'une à l'autre, en diagonale par rapport à la direction de transport (x).

6. Installation de traitement selon la revendication 5, **caractérisée en ce que** la machine à souder (12) est configurée de telle sorte que, pour tourner la tête de bande (2) de la bande métallique respective (1) et le pied de bande (3) de la bande métallique (1) amenée en partie au magasin de bandes (8), des boucles sont formées dans des régions correspondantes de la tête de bande (2) de la bande métallique respective (1) et du pied de bande (3) de la bande métallique (1) amenée en partie au magasin de bandes (8) .

7. Installation de traitement selon la revendication 5 ou 6, **caractérisée en ce que** le dispositif de traitement (11) est conçu sous forme d'un laminoir comprenant au moins une cage de laminoir.

8. Installation de traitement selon la revendication 5, 6 ou 7,
**caractérisée en ce qu'**un angle (α), que le cordon de soudure (14) respectif forme avec la direction de transport (x), diffère d'environ 5° à 10° par rapport à 90°, en particulier de 6° à 8°.
